# FASCICULE DE BREVET EUROPEEN

(11) **EP 0 511 100 B1**
(45) Date de publication et mention de la délivrance du brevet: **21.06.1995**
(21) Numéro de dépôt: 92401150.5
(22) Date de dépôt: 23.04.1992
(51) Int. Cl.: B60R 22/26, B60N 2/02

(54) **Siège individuel ergonomique pour véhicule automobile**
Ergonomischer Einzelsitz für Kraftfahrzeuge
Ergonomic individual seat for motor vehicles

(30) Priorité: 25.04.1991 FR 9105096
(43) Date de publication de la demande: 28.10.1992
(73) Titulaire: AUTOMOBILES PEUGEOT, 75116 Paris (FR); AUTOMOBILES CITROEN, 92200 Neuilly-sur-Seine (FR)
(72) Inventeur: Brard, Jean-Luc, F-94230 Cachan (FR)
(74) Mandataire: Fabien, Henri

(56) Documents cités:
- EP-A- 0 102 708
- EP-A- 0 302 315
- EP-A- 0 350 458
- EP-A- 0 363 261
- DE-A- 3 813 557
- FR-A- 2 536 350
- US-A- 4 889 389

## Description

L'invention concerne un siège individuel ergonomique pour véhicule automobile, du type réglable longitudinalement et intégrant complètement un système de retenue comportant toutes les fixations d'une ceinture de sécurité de préférence du type 3 points munie d'un enrouleur.

Elle concerne également un véhicule automobile équipé aux places avant de deux de ces sièges.

Dans les sièges de ce type connus, l'enrouleur est généralement fixé soit sur le dossier du siège en partie haute, soit au dos du dossier en partie basse, un dispositif de guidage et de renvoi de la sangle de la ceinture étant dans ce cas prévu en partie haute du dossier.

Ces dispositions créent un problème de tenue du dossier aux efforts engendrés par la tension de la sangle lors d'un choc. Ce problème est d'autant plus difficile à résoudre que le dossier comporte toujours sur les véhicules actuels aux places avant un réglage d'inclinaison par rapport à l'assise du siège.

L'invention a donc pour objet un siège ergonomique s'adaptant à des conducteurs et des passagers de différentes tailles et remédiant aux inconvénients ci-dessus en séparant notamment la fonction retenue de la fonction dossier, comme il est connu par le document US-A-4 889 389.

Le siège décrit dans ce document comporte une structure rigide sur laquelle peut être articulé un dossier et supportant un coussin d'assise, ladite structure supportant un bras fixe sensiblement vertical disposé latéralement et à la partie arrière, ledit bras comportant à sa partie supérieure des moyens d'ancrage d'une extrémité de la ceinture de sécurité.

Une étude approfondie a montré que si on positionne les points H (point correspondant à l'articulation de la hanche) de mannequins représentatifs de personnes de 1,54m et 1,90m sur une pente à 30%, on améliore de façon significative la position relative du grand et du petit.

Cette configuration réduit l'écart en hauteur entre le petit et le grand mannequin. Cet écart qui est alors de 18mm rehausse le petit, ce qui pose le problème de son accès aux pédales. Pour améliorer cet accès aux pédales, il est apparu très intéressant de conjuguer ce positionnement relatif en hauteur avec un basculement de l'assise vers l'avant. La manoeuvre des pédales est ainsi facilitée pour les conducteurs de petite taille.

A cet effet un siège individuel pour véhicule automobile, selon l'invention, est caractérisé en ce que sa structure comporte une coque constituée de deux joues latérales reliées entre elles par des traverses, le bras fixe et l'une des joues formant un corps creux monopièce rigide et en ce que le coussin d'assise est supporté par la coque de façon indépendante du dossier et qu'il est prévu des moyens permettant le basculement de l'assise autour d'un axe transversal disposé à l'avant de la coque et en couplant ce basculement au mouvement longitudinal de la coque sur des glissières.

De préférence ces moyens assujettissent le basculement de l'assise au mouvement longitudinal de la coque sur des glissières. A cet effet on peut par exemple disposer à l'arrière de l'assise et de chaque côté, un galet coopérant avec une rampe montée fixe par rapport au plancher du véhicule et dont la pente s'élève vers l'avant.

Selon une autre caractéristique le déplacement de la coque de l'avant à l'arrière s'effectue sur des glissières présentant une pente par rapport au plancher horizontal d'environ 15% s'élevant vers l'avant, le mouvement combiné de coulissement et de basculement de l'assise faisant évoluer le point H du conducteur sur une pente de 30% s'élevant vers l'avant.

Enfin les moyens d'ancrage disposés à la partie supérieure du bras permettent de loger et d'ancrer un enrouleur.

Un véhicule automobile conforme à l'invention se caractérise en ce que les bras porteurs des moyens d'ancrage des deux sièges individuels avant sont disposés au voisinage de l'axe médian du véhicule de façon à n'en pas perturber l'accessibilité, notamment s'il s'agit d'un véhicule à deux portes latérales.

L'invention sera mieux comprise et d'autres caractéristiques et avantages en apparaîtront à la lecture de la description détaillée qui va suivre et pour la compréhension de laquelle on se reportera aux dessins annexés, dans lesquels :
- la figure 1 est une vue perspective éclatée d'un siège selon l'invention,
- la figure 2 est une vue perspective de l'agencement de deux sièges dans un véhicule, conformément à l'invention,
- les figures 3 et 4 montrent en coupe le mécanisme de basculement d'assise respectivement suivant les deux positions extrêmes,
- la figure 5 montre schématiquement la position de conduite de deux conducteurs de tailles différentes.

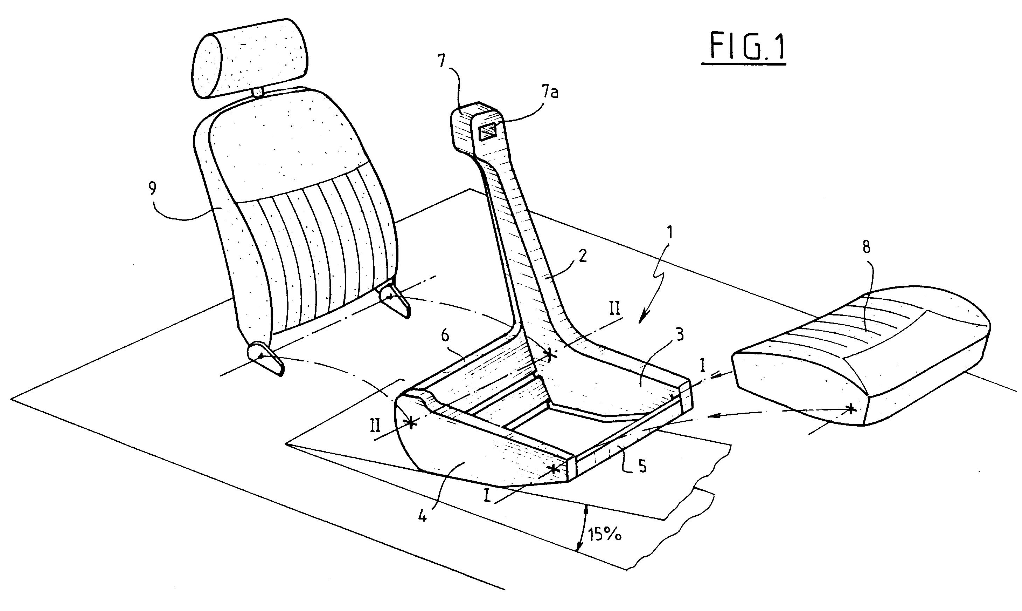

La coque 1 (figure 1) formant la structure rigide du siège est munie d'un bras latéral 2. Cette coque est constituée de deux joues latérales 3 et 4 reliées entre elles par une traverse avant 5 et une traverse arrière 6. Le bras 2 et la joue intérieure 3 forment un corps creux monopièce rigide. Le bras 2 implanté à l'arrière de la coque 1, sensiblement à l'aplomb de la traverse 6, s'élève verticalement avec une légère inclinaison vers l'arrière et comporte à son extrémité supérieure un logement 7 destiné à recevoir un enrouleur d'une ceinture de sécurité dont la sangle se déroule au travers d'une ouverture 7a.

Sur cet ensemble 1, réalisé en mécano-soudure, sont disposés les mécanismes de l'assise 8 articulée autour d'un axe transversal I-I disposé à l'avant et du dossier 9 articulé autour d'un axe transversal II-II disposé à l'arrière sensiblement au niveau de la jonction entre le bras 2 et la joue 3.

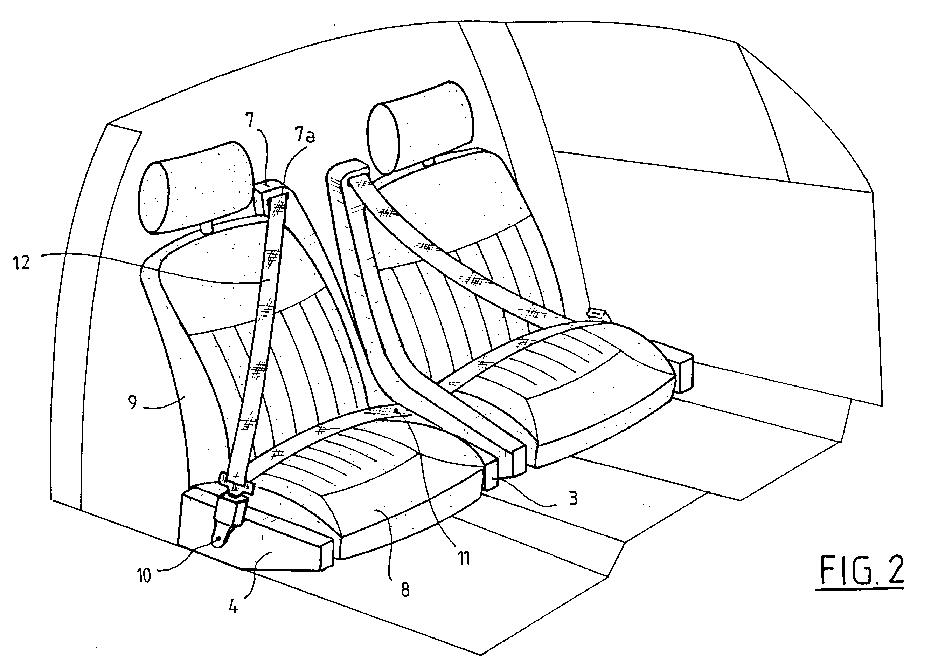

En se référant maintenant à la figure 2, on voit que la partie fixe ou pédoncule 10 de la boucle de la ceinture de sécurité 12, du type courant à 3 points et enrouleur, est ancrée sur la joue latérale 4, tandis que le point fixe 11 est ancré sur la joue intérieure 3 sensiblement à l'aplomb de l'enrouleur disposé et ancré dans le logement 7. On pourrait bien sûr inverser la position du point fixe 11 et de l'enrouleur.

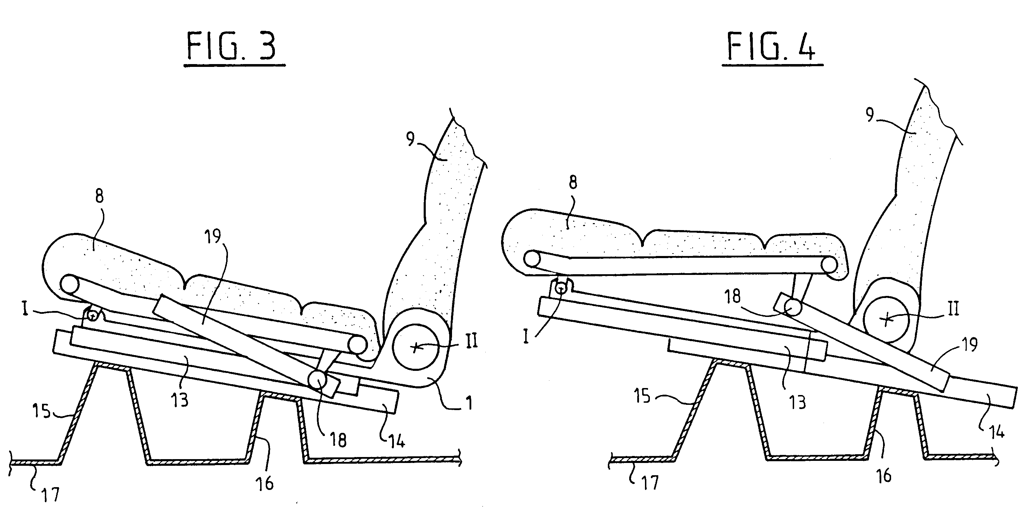

On va maintenant décrire en référence aux figures 3 et 4, un exemple de réalisation d'un mécanisme assujetissant le basculement de l'assise 8 autour de l'axe I-I au mouvement d'avance et de recul de la coque 1. Deux glissières parallèles 13 (dont une seule apparaît sur les figures) sont solidaires de la coque 1. Les glissières mobiles 13 sont montées coulissantes dans des glissières 14 fixées sur des traverses 15,16 du plancher 17 du véhicule. Les glissières 14 présentent par rapport au plancher horizontal 17 une pente d'environ 15% s'élevant vers l'avant du véhicule. A l'arrière de l'assise 8 et de chaque côté un galet 18 coopère avec une rampe 19 montée fixe par rapport au plancher 17 avec une inclinaison de même sens que celle des glissières 14 mais plus importante.

Pour rendre plus clair le fonctionnement du mécanisme de basculement de l'assise, l'amplitude des mouvements a été volontairement augmentée. Sur la figure 3 la coque 1 est en position de recul maximum, les galets 18 sont alors en position basse à l'extrémité arrière des deux glissières fixes 19.

Lorsque le conducteur (ou le passager) veut modifier la position longitudinal du siège, il agit sur un levier (non représenté) permettant de déverrouiller les glissières 13 et 14 . Ce mécanisme de verrouillage tout à fait habituel ne nécessite pas d'être décrit.

La coque 1 peut donc coulisser vers l'avant depuis la position représentée en figure 3 jusqu'à celle représentée en figure 4. Lors de ce mouvement les galets 18 guidés dans les glissières 19 entraînent le pivotement de l'assise autour de l'axe I-I.

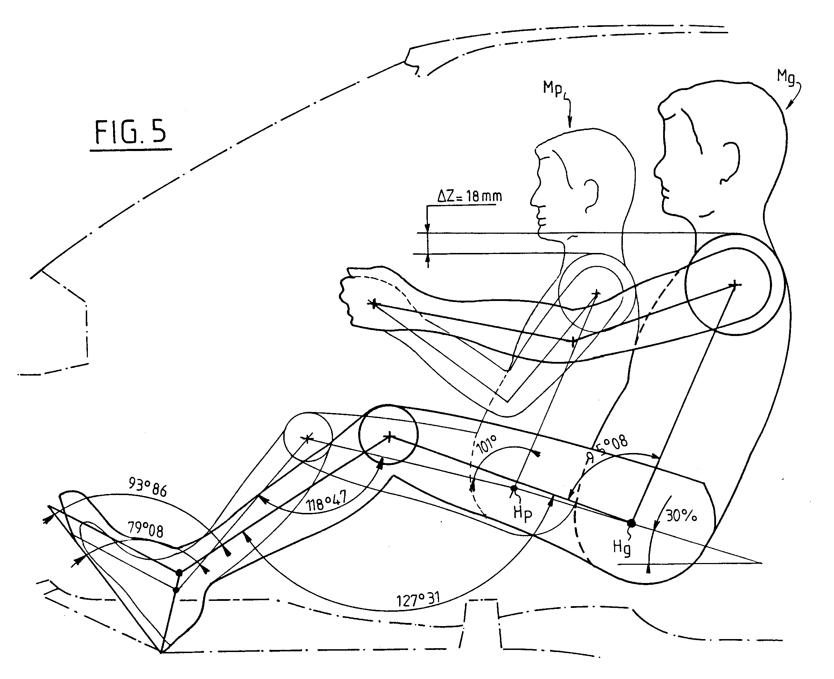

On a représenté en figure 5 les silhouettes de deux mannequins normalisés placés en position de conduite dans un véhicule équipé de sièges conformes à l'invention. Le mannequin Mp correspond à un conducteur de petite taille (1,54m) et le mannequin Mg à un conducteur de grande taille (1,90m). Le segment de droite qui relie les articulations de hanche des deux mannequins, référencées respectivement Hp et Hg, présente une pente d'environ 30%.

Dans ces conditions on constate que l'écart en altitude, mesuré à l'épaule, entre le petit et le grand mannequin est réduit à 18mm. L'inclinaison et la longueur du bras 2 sont telles que l'ouverture 7a est disposée légèrement au dessus et en arrière de l'épaule du mannequin Mg.

Le passage de l'une à l'autre position est effectué par une manoeuvre unique du conducteur pour régler sa position longitudinale, la coque 1 se déplaçant sur une rampe de 15% et le coussin d'assise étant basculé autour de l'axe I-I comme explicité ci-dessus. Au cours de cette manoeuvre le dossier 9, lié à la coque 1 s'est déplacé parallèlement à lui-même, puisque son réglage d'inclinaison est indépendant de celui de l'assise 8.

On voit que grâce à l'invention on obtient une position de sangle de ceinture de sécurité optimale quelle que soit la position du siège et la taille des passagers. L'efficacité de la retenue est par ailleurs accrue grâce à la réduction de la longueur de sangle utile. Enfin la structure du siège permet à celui-ci de participer à l'absorption d'énergie lors d'un choc longitudinal et d'augmenter aussi la protection aux chocs latéraux.

Il va de soi que les glissières sur lesquelles la coque 1 est montée coulissante sont d'un type renforcé comme sur les sièges connus intégrant le système de retenue.

Des variantes peuvent bien entendu être introduites sans sortir du cadre de l'invention. C'est ainsi que l'axe de rotation I-I au lieu d'être fixe pourrait être de hauteur réglable, la coque 1 comportant alors des moyens de réglage de la position verticale de cet axe autour duquel l'assise 8 peut basculer.

## Revendications

1. Siège individuel pour véhicule automobile, réglable en position longitudinale et du type intégrant complètement un système de retenue comportant toutes les fixations d'une ceinture de sécurité (12) munie d'un enrouleur, comportant une structure rigide (1) sur laquelle est articulé un dossier (9) et supportant un coussin d'assise (8), ladite structure supportant un bras fixe (2) sensiblement vertical disposé latéralement et à la partie arrière, ledit bras comportant à sa partie supérieure des moyens (7) d'ancrage d'une extrémité de la ceinture (12),
caractérisé en ce que ladite structure comporte une coque (1) constituée de deux joues latérales (3) et (4) reliées entre elles par des traverses (5,6), le bras fixe (2) et l'une des joues (3) formant un corps creux monopièce rigide et en ce que le coussin d'assise (8) est supporté par la coque (1) de façon indépendante du dossier (9) et qu'il est prévu des moyens (18,19) permettant le basculement de l'assise (8) autour d'un axe transversal (I-I) disposé à l'avant de la coque (1) et couplant ce basculement au mouvement longitudinal de la coque (1) sur des glissières (13,14).

2. Siège selon la revendication 1,
caractérisé en ce que les moyens d'ancrage (7) permettent de loger et d'ancrer un enrouleur.

3. Siège selon la revendication 1 ou la revendication 2,
caractérisé en ce que les moyens de basculement (18,19) comportent, disposés à l'arrière de l'assise (8) et de chaque côté un galet (18) coopérant avec une rampe (19) montée fixe par rapport au plancher (17) avec une pente s'élevant vers l'avant du véhicule.

4. Siège selon la revendication 3,
caractérisé en ce que le déplacement de la coque de l'avant à l'arrière s'effectue sur des glissières (14) présentant une pente par rapport au plancher horizontal (17) d'environ 15% s'élevant vers l'avant, le mouvement combiné de coulissement et de basculement de l'assise faisant évoluer le point H du conducteur sur une pente de 30% s'élevant vers l'avant.

5. Siège selon l'une quelconque des revendications précédentes,
caractérisé en ce qu'il comporte en outre des moyens de réglage de la position verticale de l'axe I-I.

6. Véhicule automobile équipé aux places avant de deux sièges conformes à l'une quelconque des revendications précédentes,
caractérisé en ce que les bras (2) porteurs des moyens d'ancrage (7) des deux sièges sont disposés au voisinage de l'axe médian du véhicule.

## Claims

1. An individual seat for a motor vehicle, adjustable as to longitudinal position and of the type completely incorporating a retaining system comprising all the fastenings for a safety belt (12) provided with a retractor, comprising a rigid structure (1) to which a seat back is hinged (9) and supporting a seat cushion (8), said structure supporting a fixed, substantially vertical arm (2) arranged laterally and to the rear, said arm comprising, in its upper portion, means (7) for anchoring one end of the belt (12),
characterised in that said structure comprises a shell (1) constituted by two lateral cheeks (3) and (4) connected together by crosspieces (5, 6), the fixed arm (2) and one of the cheeks (3) forming a rigid one-part hollow body, and in that the seat cushion (8) is supported by the shell (1) independently from the seat back (9) and that means (18, 19) are provided allowing the seat (8) to tilt around a transverse axis (I-I) arranged at the front of the shell (1) and coupling this tilting to the longitudinal movement of the shell (1) on runners (13, 14).

2. A seat according to Claim 1,
characterised in that the anchoring means (7) allow a retractor to be housed and anchored.

3. A seat according to Claim 1 or Claim 2,
characterised in that the tilting means (18, 19) comprise, arranged at the rear of the seat (8) and on either side, a roller (18) cooperating with a ramp (19) mounted so as to be fixed relative to the floor (17) with a gradient rising towards the front of the vehicle.

4. A seat according to Claim 3,
characterised in that the displacement of the shell from front to back takes place on runners (14) having a gradient relative to the horizontal floor (17) of around 15% rising towards the front, the combined sliding and tilting movement of the seat causing the point H of the driver to move over a gradient of 30% rising towards the front.

5. A seat according to any one of the preceding claims,
characterised in that it further comprises means for adjusting the vertical position of the axis I-I.

6. A motor vehicle equipped in the front with two seats in accordance with any one of the preceding claims,
characterised in that the arms (2) carrying the anchoring means (7) for the two seats are arranged in the vicinity of the median axis of the vehicle.

## Patentansprüche

1. Einzelsitz für Kraftfahrzeuge, welcher der Länge nach verstellbar und von der Art ist, in die ein Rückhaltesystem mit allen Befestigungen für einen mit einem Aufroller versehenen Sicherheitsgurt (12) komplett integriert ist, der ein starres Gerüst (1) umfaßt, an das eine Rückenlehne (9) gelenkig montiert ist, und das ein Sitzpolster (8) trägt, wobei das Gerüst einen starr mit ihm verbundenen und im wesentlichen vertikalen Arm (2) trägt, der seitlich und im hinteren Bereich angeordnet ist, wobei dieser Arm in seinem oberen Bereich Verankerungsvorrichtungen (7) für ein Ende des Sicherheitsgurtes (12) aufweist,
dadurch gekennzeichnet, daß dieses Gerüst eine Schale (1) umfaßt, die aus zwei Seitenteilen (3) und (4) besteht, die miteinander durch Querträger (5, 6) verbunden sind, wobei der starre Arm (2) und das eine der beiden Seitenteile (3) einen starren Hohlkörper aus einem Stück bilden, und daß das Sitzpolster (8) unabhängig von der Rückenlehne (9) von der Schale (1) getragen wird, und daß Vorrichtungen (18, 19) vorgesehen sind, die ein Kippen des Sitzes (8) um eine im vorderen Bereich der Schale (1) angeordnete Querachse (I-I) erlauben, und indem dieses Kippen an die Längsbewegung der Schale (1) auf Gleitschienen (13, 14) gekoppelt ist.

2. Sitz nach Anspruch 1, dadurch gekennzeichnet, daß die Verankerungsvorrichtungen (7) einen Aufroller aufnehmen und verankern können.

3. Sitz nach Anspruch 1 oder 2, dadurch gekennzeichnet, daß die Vorrichtungen zum Kippen (18, 19) im hinteren Bereich des Sitzes (8) und auf jeder Seite ein Lager (18) aufweisen, das mit einer Schrägleiste (19) zusammenwirkt, die bezüglich des Bodens (17) fest mit einer Neigung montiert ist, die zum vorderen Bereich des Fahrzeugs hin zunimmt.

4. Sitz nach Anspruch 3, dadurch gekennzeichnet, daß die Vor- und Rückbewegung der Schale auf Gleitschienen (14) erfolgt, die bezüglich des horizontalen Bodens (17) eine nach vorne ansteigende Neigung von etwa 15 % aufweisen, wobei die gekoppelte Gleit- und Kippbewegung des Sitzes den Punkt H des Fahrers auf eine nach vorne ansteigende Neigung von 30 % bringt.

5. Sitz nach einem der vorstehenden Ansprüche, dadurch gekennzeichnet, daß er außerdem Vorrichtungen zum Einstellen der vertikalen Position der Achse I-I aufweist.

6. Kraftfahrzeug, das auf den Vorderplätzen mit zwei Sitzen ausgestattet ist, die einem der vorstehenden Ansprüche entsprechen, dadurch gekennzeichnet, daß die Arme (2), welche die Verankerungsvorrichtungen (7) der beiden Sitze tragen, nahe der Mittelachse des Fahrzeugs angeordnet sind.
